# EUROPEAN PATENT SPECIFICATION

(11) **EP 0 866 927 B1**
(45) Date of publication and mention of the grant of the patent: **04.08.1999**
(21) Application number: 96940168.6
(22) Date of filing: 12.12.1996
(51) Int. Cl.: F16H 1/22

(54) **GEAR TRANSMISSION**
GETRIEBE
TRANSMISSION PAR ENGRENAGE

(30) Priority: 14.12.1995 NL 1001902
(43) Date of publication of application: 30.09.1998
(73) Proprietor: CROWN GEAR B.V., 7544 RG Enschede (NL)
(72) Inventor: BASSTEIN, Augustinus, Franciscus, Herman, NL-4841 CH Prinsenbeek (NL)
(74) Representative: Iemenschot, Johannes Andreas, Ir.
(86) International application number: NL9600485
(87) International publication number: WO9721939

(56) References cited:
- WO-A-95/16151
- FR-A- 1 512 420
- MERRITT: "GEARS" 11 February 1946 , PITMAN , LONDON XP002010161 see page 356, paragraph 17.12 - page 357

## Description

The invention relates to a gear transmission between an input shaft and an output shaft, comprising a first and second face gear which are rotatable about a first axis of rotation and have identical toothing as regards number of teeth and module, which face gears are mounted at an adjustable distance from each other with the toothing facing each other and with an essentially fixed rotation position relative to each other, a first cylindrical pinion with an axis of rotation at right angles to the first axis of rotation, which first pinion is in mesh with the first face gear with a first tooth clearance, and a second cylindrical pinion whose axis of rotation is parallel to the axis of rotation of the first cylindrical pinion, which second pinion is in mesh with the second face gear with a second tooth clearance, while the input or the output shaft being connected to the first pinion.

Such a transmission is known from W095/16151, which discloses a drive in which the first face gear is connected by way of a bush to the second face gear. The face gears are in mesh respectively with the first pinion and the second pinion, which acts as an intermediate pinion. The first pinion is driven by a hydraulic motor. In the case of the known device it is assumed that the tooth clearances occurring are taken up by making the bush elastic. In the case of the known device the elasticity of the bush is suitable only for making the face gears rotate through a limited angle relative to each other. The result of this is that when the direction of rotation is changed one face gear will be under a much greater load than the other face gear, because different tooth clearances exist between the driven pinion and the face gears. This means that the tooth clearances are virtually impossible to take up for both directions of rotation. The bush is set for one direction of rotation and on reversal of the direction of rotation only one face gears meshes with the pinion, and the other face gears retains clearance. This means that the moment to be transmitted by the device is different for the two directions of rotation, which is undesirable for a large number of applications.

The object of the invention is to produce an improvement in this respect, and to this end the toothings of the face gears and the pinions in mesh therewith are designed in such a way that, after theoretically correct setting of the toothings, the first tooth clearance is greater than the second tooth clearance.

The fact that the first tooth clearance between the first pinion connected to the input or output shaft and the first face gear in mesh therewith is made greater than the second tooth clearance between the second pinion and the second face gear means that in the usual case where a third tooth clearance is present between the first and the second pinions, which is necessary for good functioning of the transmission, it becomes possible for both face gears to rest against the pinions in mesh therewith in both directions of rotation.

A further improvement is achieved by making the first tooth clearance equal to the sum of the second and the third tooth clearance.

In this way it is ensured that, when the direction of rotation of the first pinion is reversed, the first clearance between first pinion and first face gear is traversed and at the same time the second tooth clearance and the third tooth clearance are traversed, so that both face gears simultaneously mesh again and change direction of rotation.

A further improvement is achieved by making the face gears, which are mounted at an adjustable distance from each other, movable in the direction of their axis of rotation. This ensures that the two forces acting in the direction of the axis of rotation are identical between the two face gears and the pinions in mesh therewith, which also means that the tooth forces are identical and that both wheels are under equal load.

A further improvement is achieved by providing the second pinion with more teeth than the first pinion. Since this is an intermediate pinion, the teeth of the second pinion are more frequently under load than the teeth of the first pinion, with the result that fatigue fracture can occur sooner. The resistance to fatigue is improved by designing the second pinion with a larger diameter.

According to a preferred embodiment, by having the first and/or the second pinion crossed by the first shaft, it becomes possible to reduce the distance between the face gears, with the result that a more compact transmission is possible.

According to a further preferred embodiment of the invention, the toothings of the first pinion and the first face gear in mesh therewith are designed in such a way by selection of number of teeth, pressure angle and tooth correction factor of the first pinion and diameters of the toothing of the face gear that a line of contact between the first face gear and the first pinion runs parallel to a line of contact between the first pinion and the second pinion, the direction of which depends on, inter alia, the number of teeth, the pressure angle, the tooth correction factor and the centre-to-centre distance of the pinions.

In the event of the lines of contact running parallel, it is possible, if desired, to design the first pinion with bearings which bound the movement of the first pinion solely in its axial direction, and the pinion in the direction at right angles to its axial direction is held in position by the tooth forces running in the direction of the lines of contact.

According to a further preferred embodiment, the face gears are mounted on a face gear shaft, and a third cylindrical pinion is mounted between the face gears on said shaft, which third pinion is in mesh with a gearwheel which is mounted on a shaft parallel to the face gear shaft. A large transmission ratio is achieved in this way. Designing this third pinion with such toothing that the tooth forces do not produce any axial force on the face gear shaft means that a gear transmission in which the bearings of the shafts are not subjected to any tooth forces in the axial direction is produced, with the result that the walls of the gearbox in which the bearings are fixed can be made lighter and costs can be saved. Such toothing can be, for example, a straight toothing or possibly a V-toothing.

The invention is explained in the following description of an exemplary embodiment with reference to a drawing, in which:
Figure 1 shows a diagrammatic section of a gearbox with a gear transmission according to the invention;
Figure 2 shows a section corresponding to that along the line II-II in Figure 1 of a gearbox which is modified slightly compared with Figure 1;
Figure 3 shows a diagrammatic side view of a gear transmission according to the invention, in which the axes of rotation of the pinions cross the axis of rotation of the face gears.

In the various figures corresponding parts are always provided with the same reference numbers.

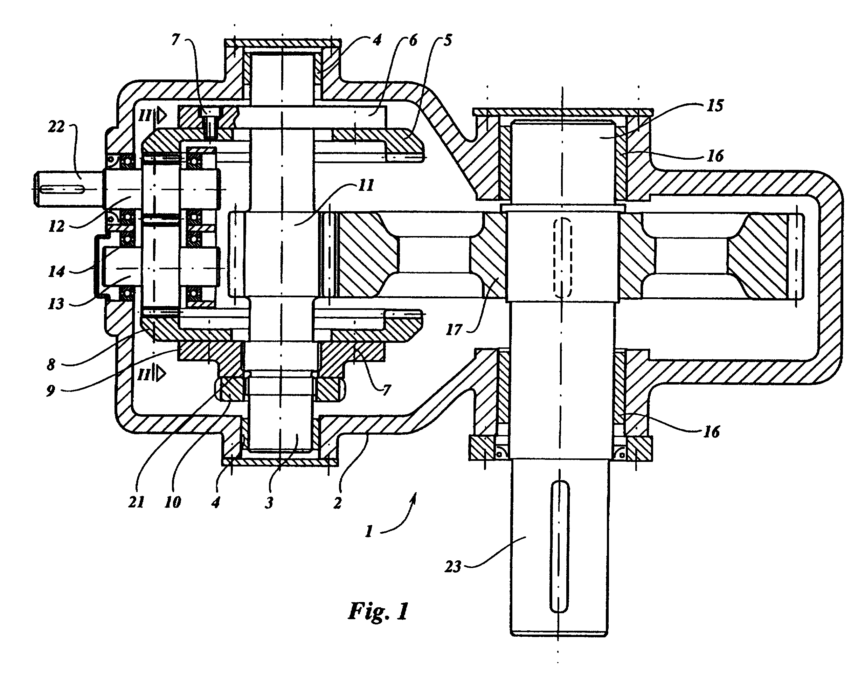

Figure 1 shows a gearbox 1 in which a first shaft 3 is rotatably mounted by means of bearings 4 in a housing 2. The first shaft 3 is provided with a shoulder 6, to which a first face gear 5 is attached in a known manner by means of a number of bolts 7. The first shaft 3 is also provided with a multiple key toothing 21, on which a ring 9 is placed in such a way that said ring can slide in the axial direction. The movement of the ring 9 is bounded in the known manner in one direction by a shaft nut 10. A second face gear 8 is attached in a known manner to the ring 9 by means of a number of bolts 7. The toothings of the two face gears 5 and 8 face each other, and are identical as regards number of teeth and module.

A first pinion 12, which is rotatably mounted by means of bearings 14 in the housing 2, is in mesh with the first face gear 5 and with a second pinion 13, which acts as an intermediate pinion, and is likewise rotatably mounted by means of bearings 14 in the housing 2. The axis of rotation of the intermediate pinion 13 is parallel to the axis of rotation of the first pinion 12. Both axes of rotation are situated at right angles to the axis of rotation of the first shaft 3.

In the exemplary embodiment shown in Figure 1 the number of teeth of the intermediate pinion 13 is greater than the number of teeth of the first pinion 12. However, it is also possible for both pinions to have the same number of teeth, which can lead to some saving. In certain situations it is desirable for the number of teeth of the intermediate pinion 13 to be greater than that of the first pinion 12. The root of the tooth of the intermediate pinion 13 is subjected to a load twice as often as that of the first pinion, with the result that the fatigue strength can be exceeded sooner. The strength of the root of the tooth is improved by using a higher number of teeth for the intermediate pinion 13. The tooth flank of the intermediate pinion 13 is also subjected to a load twice as often as the tooth flank of the first pinion 12 when both directions of rotation occur. If the number of teeth is increased, the strain on the flank is reduced, and the service life is extended.

For a theoretically correct setting of a face gear relative to a pinion which is in mesh therewith, the face gear is moved so much in the direction of its axis of rotation that the face gear rests with its tooth flank over the entire tooth width against the tooth flank of the pinion. There is then line contact. If the distance between the axis of rotation of the pinion and the toothing of the face gear is not correct, no line contact occurs between the two tooth flanks, and only a part of the width of the toothing is utilized. The two toothings are set simultaneously relative to the pinions 12 and 13 by increasing or reducing the distance between the face gears 5 and 8 using the shaft nut 10. Due to the fact that the bearings 4 are in the form of slide bearings, the first shaft 3 can move in the axial direction under the influence of the axially directed tooth forces between the face gears 5 and 8 and the pinions 12 and 13 until these tooth forces are identical.

After the correct setting of the mesh, for a good division of the load over the two face gears 5 and 8 the pinions 12 and 13 must come into contact with the flanks of the two face gears at the same moment. This is achieved by rotating the face gears 5 and 8 in a known manner relative to each other and then fixing them on the shaft 3 in the position in which they are in mesh with the pinions.

The line contact described above can be replaced in a known manner by point contact, which under load passes into line contact, by designing the face gears or pinions with transverse curvature.

A second shaft 15 is rotatably mounted by means of bearings 16 in the housing 2. The second shaft 15 is movable to a limited extent in the axial direction in the bearings 16, which are designed in a known manner as slide bearings. A gearwheel 17 is immovably fixed on the second shaft 15, which gearwheel 17 is in mesh with a third cylindrical pinion 11, which is fitted on the first shaft 3. The toothing of the pinion 11 and the gearwheel 17 is preferably designed in such a way that no axial force is exerted on the first shaft 3 and the second shaft 15. To this end, the toothing can be in the form of straight toothing, or if desired a V-shaped toothing. This ensures that the movement of the first shaft 3 in the axial direction is determined by the tooth forces acting in the opposite direction on the first face gear 5 and the second face gear 8.

The gearbox 1 is provided with an input shaft 22, which forms part of the first pinion 12, and an output shaft 23, which forms part of the second shaft 15. The input shaft 22 and the output shaft 23 can be connected in a known manner to driving and driven machines.

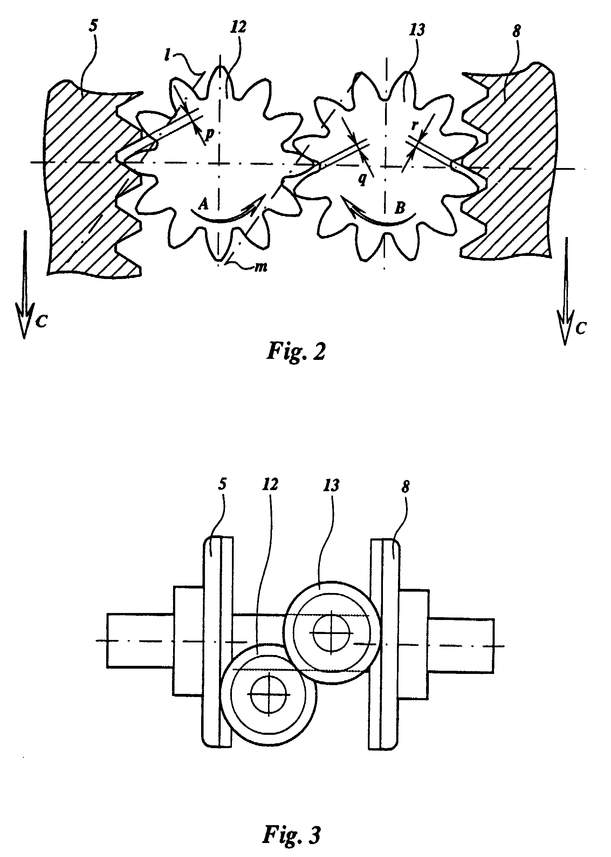

Figure 2 shows a section of a gearbox corresponding to the section along the line II-II in Figure 1, in which the number of teeth of the first pinion 12 and the intermediate pinion 13 is the same. The first pinion 12 is rotated in a direction A, in which case the meshing between the first face gear 5 and the first pinion 12 occurs along a line of contact l and between the first pinion 12 and the intermediate pinion 13 along a line of contact m.

In the situation shown in Figure 2 the first pinion 12 is in mesh with the first face gear 5, which is moved in a direction of rotation C. A tooth clearance p is present between the non-meshing flanks of first pinion 12 and first face gear 5. The first pinion 12 is also in mesh with the intermediate pinion 13, which rotates in a direction B. A tooth clearance q is present between the non-meshing flanks. The intermediate pinion 13 is also in mesh with the second face gear 8, which likewise rotates in the direction C. A tooth clearance r is present between the non-meshing flanks of intermediate pinion 13 and second face gear 8. The first face gear 5 and the second face gear 8 are mounted on the shaft 3 in the direction of rotation in such a way that, on rotation of the first pinion 12 in the direction A, both face gears mesh simultaneously, as shown in Figure 2.

If the first pinion 12 starts to rotate in a direction opposite to direction A, the first face gear 5 will start to move in the direction opposite to C after the tooth clearance p has been traversed. The second face gear 8 will start to move in this direction after the tooth clearances q and r have both been traversed. The tooth clearance p is preferably selected in such a way that it is equal to the sum of the tooth clearances q and r. The tooth clearance q can be altered by altering the centre-to-centre distance between the first pinion 12 and the intermediate pinion 13. Altering the centre-to-centre distance does not alter the meshing, because the pinions are designed with involute toothing.

The tooth clearances p and r, which occur at theoretically the correct setting of pinion and face gear, cannot be altered by altering the distance between the axis of rotation of, for example, the first pinion 12 and the first face gear 5, because said distance must be set to achieve good contact between pinion and face gear, and because when this distance is altered, the contact between pinion and face gear also alters and the bearing power is undesirably reduced. The tooth clearances p and r which are achieved (at theoretically the correct setting) are consequently entirely dependent on the shape of the toothings which have been established during production. During production, the toothings of a pinion and the face gear meshing therewith are matched to each other, so that with theoretically correct meshing the tooth clearance follows from the shape of pinion and face gear. The shape of the face gear and/or the pinion can be adapted for achieving the desired tooth clearance.

The toothings of the first pinion 12, the intermediate pinion 13 and first face gear 5 in a specific embodiment are selected in such a way that the lines of contact l and m run parallel, which means that the tooth forces on the first pinion 12 run parallel to each other. The direction of this line of contact depends, inter alia, on the selected number of teeth, the pressure angle, the tooth correction factor and the centre-to-centre distance of the first pinion 12 and the intermediate pinion 13, and on the diameters of the toothing of the first face gear 5. In the case of this known embodiment it is possible to design the first pinion 12 without radial bearings 14, because the pinion is held in position by the tooth forces.

Fig. 3 shows an embodiment of the gear transmission according to the invention in which the axes of rotation of pinion 12 and/or pinion 13 and the face gears 5 and 8 cross each other. This design makes it possible to bring the face gears 5 and 8 closer together, with the result that a more compact design is possible.

It goes without saying that it is possible for the pinions 12 and 13 and the face gears 5 and 8 to be designed either with oblique or with straight toothing, since this does not have any effect on the principle of the invention. The first pinion 12 will in any case have to be designed with axial bearings if oblique toothing is used.

## Claims

1. Gear transmission between an input shaft (22) and an output shaft (23), comprising a first and second face gear (5, 8) which are rotatable about a first axis of rotation and have identical toothing as regards number of teeth and module, which face gears are mounted at an adjustable distance from each other with the toothing facing each other and with an essentially fixed rotation position relative to each other, a first cylindrical pinion (12) with an axis of rotation at right angles to the first axis of rotation, which first pinion is in mesh with the first face gear (5) with a first tooth clearance (p), and a second cylindrical pinion (13) whose axis of rotation is parallel to the axis of rotation of the first cylindrical pinion, which second pinion is in mesh with the second face gear (8) with a second tooth clearance (r), while the input or the output shaft being connected to the first pinion, **characterized in that** the toothings of the face gears (5, 8) and the pinions (12, 13) in mesh therewith are designed in such a way that after theoretically correct setting of the toothings the first tooth clearance (p) is greater than the second tooth clearance (r).

2. Gear transmission according to claim 1, in which the second pinion (13) is in mesh with the first cylindrical pinion (12) with a third tooth clearance (q), **characterized in that** the first tooth clearance (p) is equal to the sum of the second (r) and third tooth clearance (q).

3. Gear transmission according to claim 1 or 2, **characterized in that** the face gears (5, 8), which are mounted at an adjustable distance from each other, are movable in the direction of the first axis of rotation.

4. Gear transmission according to one of claims 1-3, **characterised in that** the second pinion (13) has more teeth than the first pinion (12).

5. Gear transmission according to one of claims 1-4, **characterized in that** the axis of rotation of the first pinion (12) and/or the second pinion (13) crosses the first axis of rotation.

6. Gear transmission according to one of claims 1-5, **characterized in that** the toothings of the first pinion (12) and the first face gear (5) in mesh therewith are designed in such a way by selection of number of teeth, pressure angle and tooth correction factor of the first pinion and diameters of the toothing of the face gear that a line of contact (1) between the first face gear and the first pinion runs parallel to a line of contact (m) between the first pinion and the second pinion (13), the direction of which depends, inter alia, on the number of teeth, the pressure angle, the tooth correction factor and the centre-to-centre distance of the pinions.

7. Gear transmission according to claim 6, **characterized in that** the first pinion (12) is designed with bearings which bound the movement of the first pinion solely in its axial direction, and the pinion in the direction at right angles to its axial direction is held in position by the tooth forces running in the direction of the lines of contact.

8. Gear transmission according to one of claims 1-7, **characterised in that** the face gears (5, 8) are mounted on a face gear shaft (3), and a third cylindrical pinion (11) is mounted between the face gears on said shaft, which third pinion is in mesh with a gearwheel (17) which is mounted on a shaft (23) parallel to the face gear shaft (3).

9. Gear transmission according to claim 8, **characterized in that** the third cylindrical pinion (11) is provided with such toothing that the tooth forces produce no axial force on the face gear shaft.

## Patentansprüche

1. Zahnradgetriebe zwischen einer Eingangswelle (22) und einer Ausgangswelle (23), das ein erstes und ein zweites Kronzahnrad (5, 8) umfaßt, die um eine erste Drehachse drehbar sind und in bezug auf die Anzahl der Zähne und dem Modul eine identische Verzahnung aufweisen, wobei die Kronzahnräder in einem einstellbaren Abstand voneinander mit zueinanderweisenden Verzahnungen und einer im wesentlichen festen Drehposition relativ zueinander montiert sind, sowie ein erstes zylindrisches Ritzel (12) mit einer Drehachse unter rechtem Winkel zu der ersten Drehachse, wobei das erste Ritzel an dem ersten Kronzahnrad (5) mit einem ersten Zahnspielraum (p) eingreift, und ein zweites zylindrisches Ritzel (13), dessen Drehachse parallel zu der Drehachse der ersten zylindrischen Ritzels ist, wobei das zweite Ritzel an dem zweiten Kronzahnrad (5) mit einem zweiten Zahnspielraum (r) eingreift, während die Eingangs- oder die Ausgangswelle mit dem ersten Ritzel verbunden ist, **dadurch gekennzeichnet**, daß die Verzahnungen der Kronzahnräder (5, 8) und der daran eingreifenden Ritzel (12, 13) derart konstruiert sind, daß nach einer theoretisch richtigen Einstellung der Verzahnungen der erste Zahnspielraum (p) größer als der zweite Zahnspielraum (r) ist.

2. Zahnradgetriebe gemäß Anspruch 1, bei dem das zweite Ritzel (13) an dem ersten zylindrischen Ritzel (12) mit einem dritten Zahnspielraum (q) eingreift, **dadurch gekennzeichnet**, daß der erste Zahnspielraum (p) gleich der Summen aus dem zweiten (r) und dem dritten Zahnspielraum (q) ist.

3. Zahnradgetriebe gemäß Anspruch 1 oder 2, **dadurch gekennzeichnet**, daß die Kronzahnräder (5, 8), die mit einem einstellbaren Abstand voneinander montiert sind, in Richtung der ersten Drehachse bewegbar sind.

4. Zahnradgetriebe gemäß einem der Ansprüche 1-3, **dadurch gekennzeichnet**, daß das zweite Ritzel (13) mehr Zähne als das erste Ritzel (12) aufweist.

5. Zahnradgetriebe gemäß einem der Ansprüche 1-4, **dadurch gekennzeichnet**, daß die Drehachse des ersten Ritzels (12) und/oder des zweiten Ritzels (13) die erste Drehachse kreuzt.

6. Zahnradgetriebe gemäß einem der Ansprüche 1-5, **dadurch gekennzeichnet**, daß die Verzahnungen des ersten Ritzels (12) und des daran eingreifenden ersten Kronzahnrads (5) derart konstruiert sind, daß durch die Auswahl der Anzahl der Zähne, des Druckwinkels und des Zahnkorrekturfaktors des ersten Ritzels und der Durchmesser der Verzahnung des Kronzahnrads eine Berührungslinie (l) zwischen dem ersten Kronzahnrad und dem ersten Ritzel parallel zu einer Berührungslinie (m) zwischen dem ersten Ritzel und dem zweiten Ritzel (13) verläuft, wobei deren Richtung unter anderem von der Anzahl der Zähne, dem Druckwinkel, dem Zahnkorrekturfaktor und dem Mitte-Mitte-Abstand der Ritzel abhängt.

7. Zahnradgetriebe gemäß Anspruch 6, **dadurch gekennzeichnet**, daß das erste Ritzel (12) mit Lagern konstruiert ist, die die Bewegung des ersten Ritzels nur in seiner axialen Richtung beschränken, und das Ritzel in der zu seiner axialen Richtung rechtwinkligen Richtung in seiner Position durch die Zahnkräfte gehalten ist, die in die Richtung der Berührungslinien verlaufen.

8. Zahnradgetriebe gemäß einem der Ansprüche 1-7, **dadurch gekennzeichnet**, daß die Kronzahnräder (5, 8) auf einer Kronzahnradwelle (3) angebracht sind, und ein drittes zylindrisches Ritzel (11) zwischen den Kronzahnrädern auf der genannten Welle montiert ist, wobei das dritte Ritzel an einem Zahnrad (17) eingreift, das auf einer Welle (23) parallel zu der Kronzahnradwelle (3) angebracht ist.

9. Zahnradgetriebe gemäß Anspruch 8, **dadurch gekennzeichnet**, daß das dritte zylindrische Ritzel (11) mit einer solchen Verzahnung vorgesehen ist, daß die Zahnkräfte keine Axialkraft auf die Kronzahnradwelle ausüben.

## Revendications

1. Transmission par engrenage entre un arbre d'entrée (22) et un arbre de sortie (23), comprenant un premier et un deuxième engrenages de chant (5, 8) qui peuvent tourner autour d'un premier axe de rotation et ont une denture identique en termes de nombre de dents et de module, lesquels engrenages de chant sont montés à une distance réglable l'un de l'autre avec les dentures tournées l'une vers l'autre et avec une position en rotation essentiellement fixe l'une par rapport à l'autre, un premier pignon cylindrique (12) avec un axe de rotation à angle droit par rapport au premier axe de rotation, lequel premier pignon est en engrènement avec le premier engrenage de chant (5) avec un premier jeu (p), et un deuxième pignon cylindrique (13) dont l'axe de rotation est parallèle à l'axe de rotation du premier pignon cylindrique, lequel deuxième pignon est en engrènement avec le deuxième engrenage de chant (8) avec un deuxième jeu (r), l'arbre d'entrée ou l'arbre de sortie étant relié au premier pignon, caractérisée en ce que les dentures des engrenages de chant (5, 8) et des pignons (12, 13) en engrènement avec ceux-ci sont conçues de telle façon qu'après un réglage théoriquement correct des dentures, le premier jeu (p) est supérieur au deuxième jeu (r).

2. Transmission par engrenage selon la revendication 1, dans laquelle le deuxième pignon (13) est en engrènement avec le premier pignon cylindrique (12) avec un troisième jeu (q), caractérisée en ce que le premier jeu (p) est égal à la somme du deuxième jeu (r) et du troisième jeu (q).

3. Transmission par engrenage selon la revendication 1 ou 2, caractérisée en ce que les engrenages de chant (5, 8), qui sont montés à une distance réglable l'un de l'autre, peuvent se déplacer dans la direction du premier axe de rotation.

4. Transmission par engrenage selon l'une des revendications 1 à 3, caractérisée en ce que le deuxième pignon (13) a plus de dents que le premier pignon (12).

5. Transmission par engrenage selon l'une des revendications 1 à 4, caractérisée en ce que l'axe de rotation du premier pignon (12) et/ou du deuxième pignon (13) croise le premier axe de rotation.

6. Transmission par engrenage selon l'une des revendications 1 à 5, caractérisée en ce que les dentures du premier pignon (12) et du premier engrenage de chant (5) en engrènement avec celui-ci sont conçues de telle façon, par le choix du nombre de dents, de l'angle de pression et du facteur de correction des dents du premier pignon et les diamètres de la denture de l'engrenage de chant, qu'une ligne de contact (l) entre le premier engrenage de chant et le premier pignon s'étend parallèlement à une ligne de contact (m) entre le premier pignon et le deuxième pignon (13), dont la direction dépend, entre autres, du nombre de dents, de l'angle de pression, du facteur de correction des dents et de la distance centre-à-centre des pignons.

7. Transmission par engrenage selon la revendication 6, caractérisée en ce que le premier pignon (12) est conçu avec des paliers qui limitent le mouvement du premier pignon uniquement dans sa direction axiale, et le pignon dans la direction à angle droit par rapport à sa direction axiale est maintenu en position par les forces des dents s'exerçant dans la direction des lignes de contact.

8. Transmission par engrenage selon l'une des revendications 1 à 7, caractérisée en ce que les engrenages de chant (5, 8) sont montés sur un arbre d'engrenages de chant (3), et un troisième pignon cylindrique (11) est monté entre les engrenages de chant sur ledit arbre, lequel troisième pignon est en engrènement avec une roue d'engrenage (17) qui est montée sur un arbre (23) parallèle à l'arbre d'engrenages de chant (3).

9. Transmission par engrenage selon la revendication 8, caractérisée en ce que le troisième pignon cylindrique (11) est pourvu d'une denture telle que les forces des dents ne produisent aucune force axiale sur l'arbre d'engrenages de chant.
